# EUROPEAN PATENT SPECIFICATION

(11) **EP 2 133 012 B1**
(45) Date of publication and mention of the grant of the patent: **25.02.2015**
(21) Application number: 08010673.5
(22) Date of filing: 12.06.2008
(51) Int. Cl.: A47J 37/06

(54) **A cooking device with a hot plate and heating element**
Kochvorrichtung mit einer heißen Platte und Heizelement
Dispositif de cuisson doté d'une plaque chaude et d'un élément de chauffage

(43) Date of publication of application: 16.12.2009
(73) Proprietor: Electrolux Home Products Corporation N.V., 1130 Brussels (BE)
(72) Inventor: Leikam, Jürgen, 91161 Hilpoltstein (DE); Neukamm, Alwin, 91452 Wilhermsdorf (DE); Gauß, Fabian, 91555 Feuchtwangen (DE); Förster, Dieter, 91583 Schillingsfürst (DE)
(74) Representative: Baumgartl, Gerhard Willi

(56) References cited:
- DE-U1- 20 215 979
- US-A1- 2005 167 414
- US-A1- 2006 288 998
- US-A1- 2007 000 918

## Description

The present invention relates to a cooking device with a hot plate and at least two heating elements according to the preamble of claim 1.

Barbeque grill systems may be heated by tubular heating elements or by inductive heating elements. The tubular heating elements heat up very slowly and non-uniformly. In the beginning the heating occurs substantially above the tubular heating elements. At first the other portions remain cool. Later the other portions do not reach the same temperature as above the tubular heating elements.

The inductive heating element requires a hot plate made of ferritic steel. The heat arises in said ferritic hot plate. Since steel has a relative low thermal conductivity, multi-layer hot plates with at least one layer having a high thermal conductivity are used in order to obtain an equal temperature distribution. For example, an aluminium layer and two steel layers form the hot plate, wherein the aluminium layer is embedded between the layers made of stainless steel. In this case, at least one of the steel layers must be ferritic.

US 2007/00009189 A1 discloses a heater system with a hot plate made of metal of and thickfilm heating element. Another embodiment of said heater comprises a lower substrate and a plurality of thickfilm heating elements and corresponding single hot plates. Each heating element is separately controlled.

It is an object of the present invention to provide a cooking device with a hot plate, which allows heating zones with different temperatures and equal temperature distributions within the single heating zones, wherein different kinds of cooking procedures may be performed within a relative small place.

The object of the present invention is achieved by the cooking device according to claim 1.

According to the present invention the neighbouring heating zones are separated by at least one slot arranged in the bottom side of the hot plate, the cooking device forms an integrated part of a cooking hob and the hot plate is arranged besides or within a glass-ceramic panel.

The main idea of the present invention is the combination of the hot plate with one more thickfilm heating contact elements, wherein the thickfilm heating contact elements are in a direct contact with the bottom side of the hot plate. The cooking device of the present invention allows an equal temperature distribution on the hot plate. Further, the inventive cooking device allows a relative fast warming of the hot plate.

According to the present invention the hot plate is subdivided into heating zones, wherein each heating zone corresponds with at least one heating element.

The heating zones of the hot plate may have different temperatures. For example, the temperature of each heating zone is determined by the electric and geometric properties and the interconnection of the heating elements of said heating zone.

According to the present invention each heating zone is separately controlled or controllable. Thus, the temperatures the heating zones may be individually adjusted by an operator.

The temperature in the heating zone may be adapted to the kind of food stuff. Further, the temperatures in some heating zones may be provided for the cooking process, and the temperatures in other heating zones may be provided for keeping warm the food stuff.

According to the present invention the neighbouring heating zones are separated by at least one slot arranged in the bottom side of the hot plate. The slot prevents a heat transfer the neighbouring heating zones, so that the different temperatures of the neighbouring heating zones can be easily maintained. If the hot plate consists of several layers, then the slot may be arranged within the lower layer or layers of said hot plate.

According to the present invention the cooking device forms an integrated part of a cooking hob. Different kinds of cooking procedures may be performed within a relative small place.

According to the present invention the hot plate is arranged besides or within a glass-ceramic panel.

A substantial part of a top surface of the hot plate may be enclosed by at least one channel. For example, the channel is embossed in the hot plate. The hot plate with such a channel can be produced by one single step. The channel is provided for receiving oil, molten fat and/or other fluids.

For the electric connection the heating element comprises at least one connection terminal for connecting the heating element to a power supply, to a control unit and/or to at least one other heating element.

The heating elements of one heating zone are electrically interconnected parallel and/or in series. By the kind of the interconnection the power output and the temperature of the heating zone can be determined.

For example, the hot plate is made of steel, cast iron and/or aluminium. Preferably, at least a top layer of the hot plate is made of stainless steel.

The cooking device comprises a control unit with a number of control switches. For example, the control unit is formed as a touch pad. Alternatively, the control unit may be formed as a control panel and the control switches are mechanical switches, in particular adjusting knobs.

The cooking device and the cooking hob may comprise a common touch pad for controlling the cooking device and the cooking hob. This allows a very compact construction.

The novel and inventive features of the present invention are set forth in the appended claims.

The invention will be described in further detail with reference to the drawing, in which
- FIG 1: illustrates a perspective view of the bottom side of the cooking device according to a first embodiment of the present invention,
- FIG 2: illustrates a bottom view of a hot plate according to a second embodiment of the present invention,
- FIG 3: illustrates a bottom view of the hot plate according to a third embodiment of the present invention,
- FIG 4: illustrates a sectional side view of an outer portion of the hot plates according to the above embodiment of the present invention,
- FIG 5: illustrates a perspective view of the cooking device with a touch pad according to the first embodiment of the present invention, and
- FIG 6: illustrates a perspective view of the cooking device with adjusting knobs according to a first embodiment of the present invention.

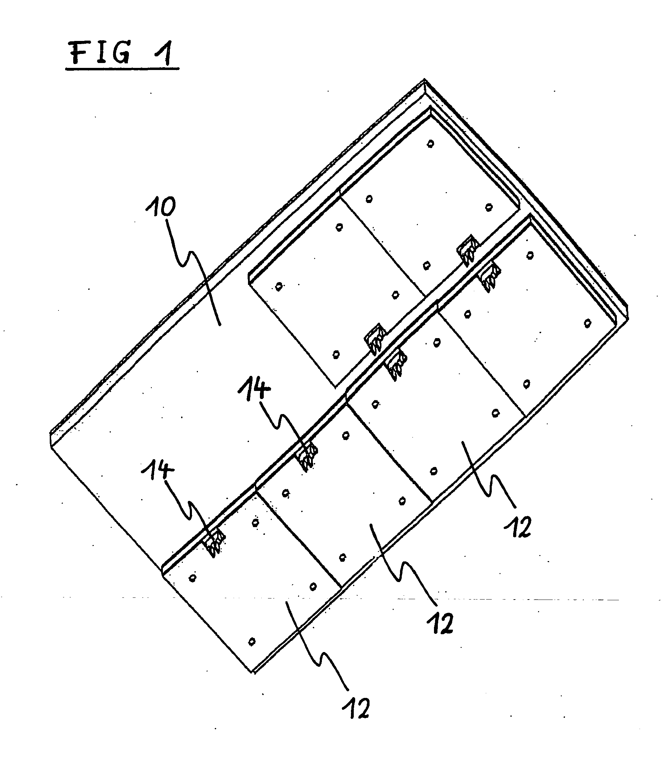

FIG 1 illustrates a perspective view of the bottom side of the cooking device according to a first embodiment of the present invention. The cooking device comprises a hot plate 10 and eight heating elements 12. For clarification only six heating elements 12 are shown in FIG 1.

The eight heating elements 12 are arranged in two lines with four heating elements 12 in each line. The heating elements 12 are block-shaped and relative flat. The flat sides of the heating elements 12 are in a direct contact with bottom side of the hot plate 10. The heating elements 12 cover nearly the complete bottom side of the hot plate 10.

The heating elements 12 are thickfilm contact heating elements. Such heating elements 12 allow an equal and fast warming of the hot plate 10. It is not necessary to provide a complex multi-layer hot plate 10. It is sufficient to use a hot plate 10 with one layer.

The heating elements 12 comprise connecting terminals 14. The connecting terminals 14 are provided for the power supply. The heating elements 12 may be interconnected parallel and/or in series. The heating elements 12 or a group of heating elements 12 may be separately controlled. Thus, the hot plate 10 is effectively subdivided into heating zones. The heating zones can be adjusted at different temperatures. The temperature of each heating zone can be individually adapted to corresponding food stuff.

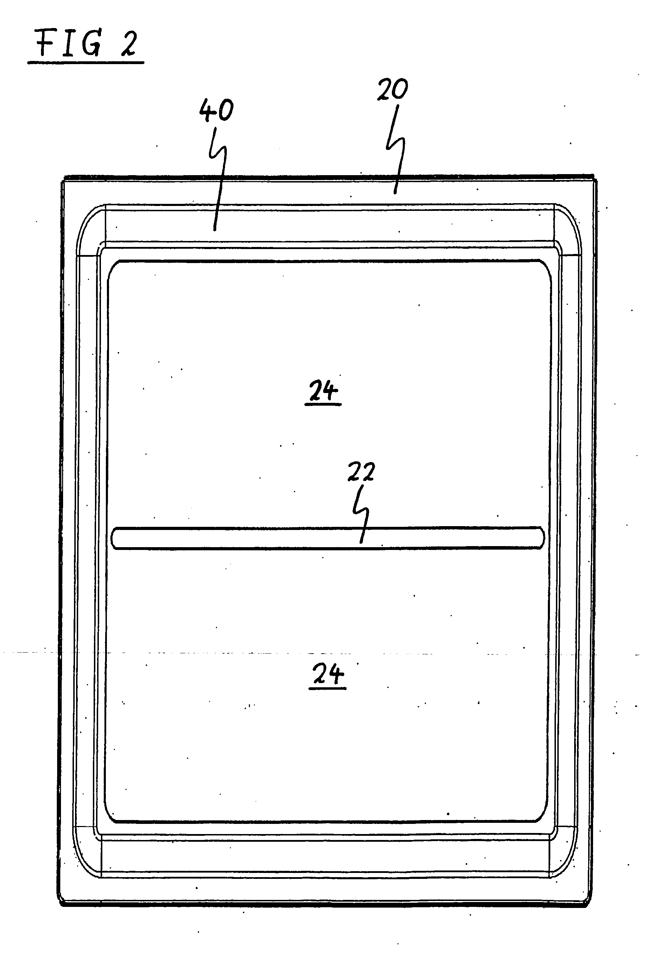

FIG 2 illustrates a bottom view of a hot plate 20 according to a second embodiment of the present invention. The hot plate 20 includes a slot 22 in its bottom side. The slot 22 extends over nearly the whole width of the hot plate 20. The hot plate 20 is subdivided into two equal heating zones 24 by the slot 22. The slot 22 prevents a heat transfer between the neighbouring heating zones 24, so that different temperatures in the heating zones 24 are adjustable in a simple way.

If the hot plate 20 comprises more layers, then the slot 22 may be arranged in the lower layers, but not in the top layer. If one or more layers of the hot plate 20 are made of aluminium, then the slot 22 may be arranged in the aluminium layer. Since aluminium has a relative high thermal conductivity, the slot 22 in the aluminium layer prevents the heat transfer between the heating zones 24 very well.

Further, the hot plate 20 comprises a channel 40 enclosing the substantial part of the top surface of the hot plate 20. The channel 40 is provided for receiving oil, molten fat and/or other fluids.

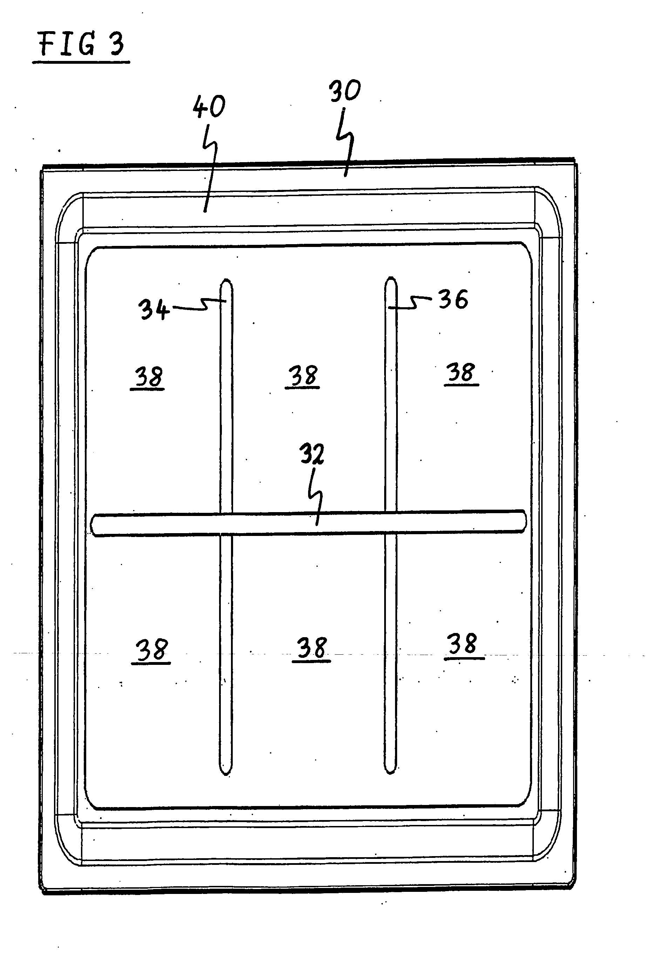

FIG 3 illustrates a bottom view of a hot plate 30 according to a third embodiment of the present invention. The hot plate 30 includes a first slot 32, a second slot 34 and third slot 36 in its bottom side. The first slot 32 extends over nearly the whole width of the hot plate 30, in a similar way as the slot 22 in FIG 2. The first slot 32 subdivides the hot plate 30 into two parts with substantially equal sizes. The second slot 34 and the third slot 36 are parallel and extend over nearly the whole length of the hot plate 30. The second slot 34 and the third slot 36 subdivide the hot plate 30 into three parts with substantially equal sizes.

Thus, the hot plate 30 is subdivided into six equal heating zones 38 by the slots 32, 34 and 36. The slots 32, 34 and 36 prevent a heat transfer between the neighbouring heating zones 38. Thus, in each heating zone 38 different temperatures are adjustable in a simple way.

If the hot plate 30 comprises more layers, then the slots 32, 34 and 36 may be arranged in the lower layers, but not in the top layer. If one or more layers of the hot plate 30 are made of aluminium, then the slots 32, 34 and 36 may be arranged in the aluminium layer. Since aluminium has a relative high thermal conductivity, the slots 32, 34 and 36 in the aluminium layer prevents the heat transfer between the heating zones 38 very well.

Also the hot plate 30 comprises the channel 40 enclosing the substantial part of the top surface of the hot plate 30. The channel 40 has the same structure as in FIG 2. The channel 40 is provided for receiving oil, molten fat and/or other fluids.

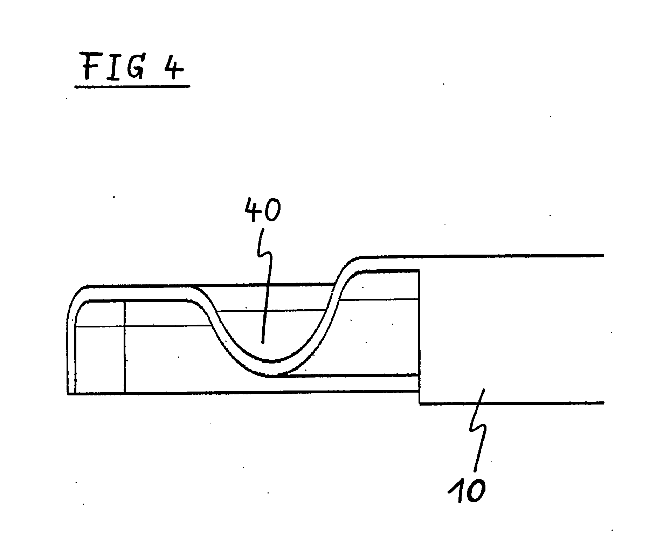

FIG 4 illustrates a sectional side view of an outer portion of the hot plates 10, 20 and 30 according to the above embodiment of the present invention. The sectional side view shows the structure of the channel 40. The channel 40 is embossed in the hot plates 10, 20 and 30. The hot plate 10, 20 or 30 with the channel 40 can be produced by one single step. The channel 40 is provided for receiving oil, molten fat and/or other fluids.

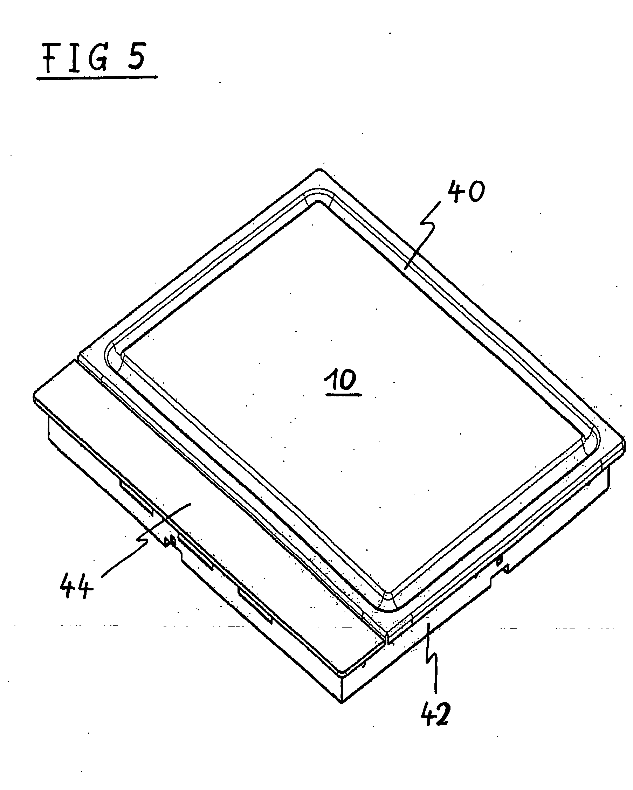

FIG 5 illustrates a perspective view of the cooking device with the hot plate 10 and a touch pad 44 according to the first embodiment of the present invention. The cooking device comprises a basic part 42, the hot plate 10 and the touch pad 44. The basic part 42 is a flat casing. The top side of the basic part 42 is covered by the hot plate 10 and the touch pad 44. The touch pad 44 comprises a number of control elements at its upper side. The control elements are provided to activate the hot plate 10 and/or the single heating elements 12, respectively. Further, the control elements are provided to adjust the temperatures of the hot plate 10 and/or the single heating elements 12, respectively. Preferable, each heating elements 12 can be separately controlled by one or more control elements, so that heating zones with different temperatures are formed.

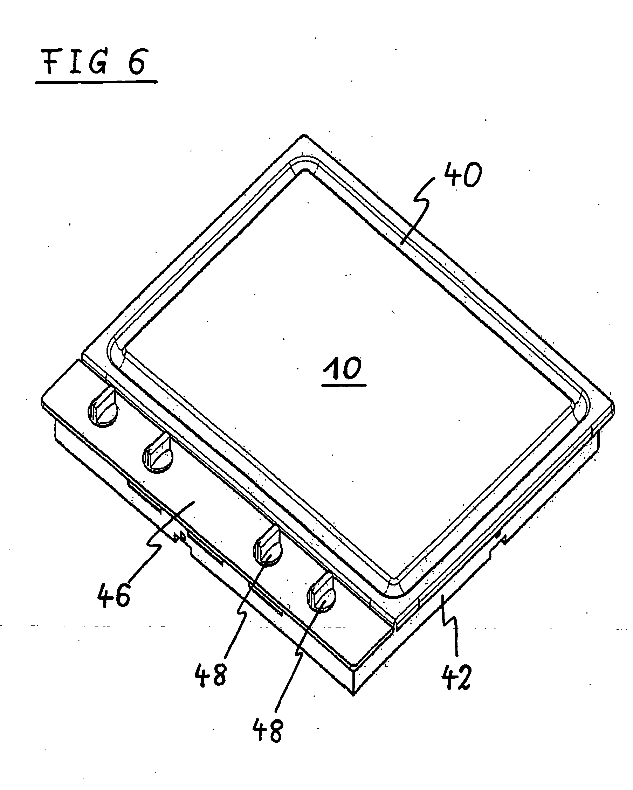

FIG 6 illustrates a perspective view of the cooking device with the hot plate 10 and a control panel 46 with adjusting knobs 48 according to a further embodiment of the present invention. Each adjusting knob 48 corresponds with one heating zone. The adjusting knobs 48 allow an individual adjusting of the temperatures in the different heating zones.

One heating element 12 or a group of heating elements 12 is controlled by one of the adjusting knobs 48, so that the heating element 12 or group of heating elements 12 define the heating zone.

Although illustrative embodiments of the present invention have been described herein with reference to the accompanying drawing, it is to be understood that the present invention is not limited to those precise embodiments, and that various other changes and modifications may be affected therein by one skilled in the art without departing from the scope of the invention as defined by the appended claims.

### List of reference numerals

- 10: hot plate
- 12: heating element
- 14: connecting terminal
- 20: hot plate
- 22: slot
- 24: heating zone
- 30: hot plate
- 32: first slot
- 34: second slot
- 36: third slot
- 38: heating zone
- 40: channel
- 42: basic part
- 44: touch pad
- 46: control panel
- 48: adjusting knob

## Claims

1. A cooking device, in particular a barbeque grill, with a hot plate (10, 20, 30) and at least two heating elements (12), wherein
- the hot plate (10, 20, 30) is provided to be in a direct contact with food stuff,
- the hot plate (10, 20, 30) is made of metal and comprises at least one layer,
- the heating elements (12) are thickfilm contact heating elements,
- the heating elements (12) are arranged at the bottom side of the hot plate (10, 20, 30),
- large-area sides of the heating elements (12) are in a direct contact with the bottom side of the hot plate (10, 20, 30),
- the hot plate (10, 20, 30) is subdivided into heating zones (24, 38),
- each heating zone (24, 38) corresponds with at least one heating element (12), and
- each heating zone (24, 38) is separately controlled or controllable,
**characterized in, that**
neighbouring heating zones (24, 38) are separated by at least one slot (22, 32, 34, 36) arranged in the bottom side of the hot plate (10, 20, 30), the cooking device forms an integrated part of a cooking hob and the hot plate (10, 20, 30) is arranged besides or within a glass-ceramic panel.

2. The cooking hob according to claim 1,
**characterized in, that**
a substantial part of a top surface of the hot plate (10, 20, 30) is enclosed by at least one channel (40).

3. The cooking hob according to claim 1 or 2,
**characterized in, that**
the heating element (12) comprises at least one connection terminal (14) for connecting the heating element (12) to a power supply, to a control unit and/or to at least one further heating element (12).

4. The cooking hob according to any one of the preceding claims,
**characterized in, that**
the heating elements (12) of one heating zone (24, 38) are electrically interconnected parallel and/or in series.

5. The cooking device according to any one of the preceding claims,
**characterized in, that**
the hot plate (10, 20, 30) is made of steel, cast iron and/or aluminium.

6. The cooking device according to any one of the preceding claims,
**characterized in, that**
at least a top layer of the hot plate (10, 20, 30) is made of stainless steel.

7. The cooking device according to any one of the preceding claims,
**characterized by**
a control unit (44, 46) with a number of control switches.

8. The cooking device according to claim 7,
**characterized in, that**
the control unit is formed as a touch pad (44).

9. The cooking device according to claim 7,
**characterized in, that**
the control unit is formed as a control panel (46) and the control switches are mechanical switches (48), in particular adjusting knobs (48).

10. The cooking device according to claim 9,
**characterized in, that**
the cooking device and the cooking hob comprise a common touch pad for controlling the cooking device and the cooking hob.

## Patentansprüche

1. Kochvorrichtung, insbesondere ein Barbecuegrill, mit einer heißen Platte (10, 20, 30) und wenigstens zwei Heizelementen (12), wobei
- die heiße Platte (10, 20, 30) für einen direkten Kontakt mit Nahrungsmitteln vorgesehen ist,
- die heiße Platte (10, 20, 30) aus Metall hergestellt ist und wenigstens eine Lage umfasst,
- die Heizelemente (12) Dickschichtkontakt-Heizelemente sind,
- die Heizelemente (12) an der Unterseite der heißen Platte (10, 20, 30) angeordnet sind,
- großflächige Seiten der Heizelemente (12) in einem direkten Kontakt mit der Unterseite der heißen Platte (10, 20, 30) sind,
- die heiße Platte (10, 20, 30) in Heizzonen (24, 38) unterteilt ist,
- jede Heizzone (24, 38) wenigstens einem Heizelement (12) entspricht und
- jede Heizzone (24, 38) getrennt gesteuert wird oder gesteuert werden kann,
**dadurch gekennzeichnet, dass**
aneinander angrenzende Heizzonen (24, 38) durch wenigstens einen Spalt (22, 32, 34, 36) getrennt sind, der in der Unterseite der heißen Platte (10, 20, 30) angeordnet ist, wobei die Kochvorrichtung ein eingebautes Teil eines Kochfelds bildet und die heiße Platte (10, 20, 30) außerhalb oder innerhalb eines Glaskeramikfelds angeordnet ist.

2. Kochfeld nach Anspruch 1,
**dadurch gekennzeichnet, dass**
ein wesentlicher Teil einer Oberfläche der heißen Platte (10, 20, 30) von wenigstens einem Kanal (40) umgeben ist.

3. Kochfeld nach Anspruch 1 oder 2,
**dadurch gekennzeichnet, dass**
das Heizelement (12) wenigstens einen Verbindungsanschluss (14) zum Anschließen des Heizelements (12) an eine Leistungsquelle, an eine Steuereinheit und/oder an wenigstens ein weiteres Heizelement (12) umfasst.

4. Kochfeld nach einem der vorhergehenden Ansprüche,
**dadurch gekennzeichnet, dass**
die Heizelemente (12) einer Heizzone (24, 38) elektrisch miteinander parallel und/oder in Reihe geschaltet sind.

5. Kochvorrichtung nach einem der vorhergehenden Ansprüche,
**dadurch gekennzeichnet, dass**
die heiße Platte (10, 20, 30) aus Stahl, Gusseisen und/oder Aluminium hergestellt ist.

6. Kochvorrichtung nach einem der vorhergehenden Ansprüche,
**dadurch gekennzeichnet, dass**
wenigstens eine obere Lage der heißen Platte (10, 20, 30) aus Edelstahl hergestellt ist.

7. Kochvorrichtung nach einem der vorhergehenden Ansprüche,
**gekennzeichnet durch**
eine Steuereinheit (44, 46) mit einer Anzahl von Bedienschaltern.

8. Kochvorrichtung nach Anspruch 7,
**dadurch gekennzeichnet, dass**
die Steuereinheit als ein Touchpad (44) ausgebildet ist.

9. Kochvorrichtung nach Anspruch 7,
**dadurch gekennzeichnet, dass**
die Steuereinheit als ein Bedienfeld (46) ausgebildet ist und das die Bedienschalter mechanische Schalter (48), insbesondere Einstellknöpfe (48), sind.

10. Kochvorrichtung nach Anspruch 9,
**dadurch gekennzeichnet, dass**
die Kochvorrichtung und das Kochfeld ein gemeinsames Touchpad zur Steuerung der Kochvorrichtung und des Kochfelds umfassen.

## Revendications

1. Dispositif de cuisson, en particulier un barbecue, doté d'une plaque chauffante (10, 20, 30) et d'au moins deux éléments (12) de chauffe,
- la plaque chauffante (10, 20, 30) étant destinée à être en contact direct avec des aliments,
- la plaque chauffante (10, 20, 30) étant constituée de métal et comportant au moins une couche,
- les éléments (12) de chauffe étant des éléments de chauffe avec contact à film épais,
- les éléments (12) de chauffe étant disposés au niveau de la face inférieure de la plaque chauffante (10, 20, 30),
- des côtés à grande superficie des éléments (12) de chauffe étant en contact direct avec la face inférieure de la plaque chauffante (10, 20, 30),
- la plaque chauffante (10, 20, 30) étant subdivisée en zones (24, 38) de chauffe,
- chaque zone (24, 38) de chauffe correspondant à au moins un élément (12) de chauffe, et
- chaque zone (24, 38) de chauffe étant commandée ou commandable séparément,
**caractérisé en ce que**
des zones (24, 38) de chauffe voisines sont séparées par au moins une rainure (22, 32, 34, 36) pratiquée dans la face inférieure de la plaque chauffante (10, 20, 30), le dispositif de cuisson constitue une partie intégrées d'un réchaud de cuisson et la plaque chauffante (10, 20, 30) est disposée à côté ou à l'intérieur d'une table vitrocéramique.

2. Réchaud de cuisson selon la revendication 1,
**caractérisé**
**en ce qu'**une partie substantielle d'une surface supérieure de la plaque chauffante (10, 20, 30) est entourée par au moins une gouttière (40).

3. Réchaud de cuisson selon la revendication 1 ou 2,
**caractérisé en ce que**
l'élément (12) de chauffe comporte au moins une borne (14) de raccordement servant à raccorder l'élément (12) de chauffe à une alimentation électrique, à une unité de commande et/ou à au moins un élément (12) de chauffe supplémentaire.

4. Réchaud de cuisson selon l'une quelconque des revendications précédentes,
**caractérisé en ce que**
les éléments (12) de chauffe d'une même zone (24, 38) de chauffe sont interconnectés électriquement en parallèle et/ou en série.

5. Dispositif de cuisson selon l'une quelconque des revendications précédentes,
**caractérisé en ce que**
la plaque chauffante (10, 20, 30) est constituée d'acier, de fonte et/ou d'aluminium.

6. Dispositif de cuisson selon l'une quelconque des revendications précédentes,
**caractérisé**
**en ce qu'**au moins une couche supérieure de la plaque chauffante (10, 20, 30) est constituée d'acier inoxydable.

7. Dispositif de cuisson selon l'une quelconque des revendications précédentes,
**caractérisé par**
une unité (44, 46) de commande dotée d'une multiplicité de commutateurs de commande.

8. Dispositif de cuisson selon la revendication 7,
**caractérisé en ce que**
l'unité de commande est réalisée sous la forme d'un pavé tactile (44).

9. Dispositif de cuisson selon la revendication 7,
) **caractérisé en ce que**
l'unité de commande est réalisée sous la forme d'un tableau (46) de commande et les commutateurs de commande sont des commutateurs mécaniques (48), en particulier des boutons (48) de réglage.

10. Dispositif de cuisson selon la revendication 9,
**caractérisé en ce que**
le dispositif de cuisson et le réchaud de cuisson comportent un pavé tactile commun servant à commander ) le dispositif de cuisson et le réchaud de cuisson.
